(19) Europäisches Patentamt

European Patent Office

Office européen des brevets

(11) **EP 4 250 179 A1**

(12) **EUROPEAN PATENT APPLICATION**

(43) Date of publication:
**27.09.2023 Bulletin 2023/39**

(21) Application number: **23163105.2**

(22) Date of filing: **21.03.2023**

(51) International Patent Classification (IPC):
*G06N 3/04* (2023.01)   *G06N 3/08* (2023.01)

(52) Cooperative Patent Classification (CPC):
**G06N 3/04; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 KR 20220035448**

(71) Applicant: **Samsung Electronics Co., Ltd.
Suwon-si, Gyeonggi-do 16677 (KR)**

(72) Inventors:
• **Kim, Gunhee
  Suwon-si, Gyeonggi-do (KR)**
• **Lee, Seungwon
  Suwon-si, Gyeonggi-do (KR)**

(74) Representative: **Grünecker Patent- und Rechtsanwälte
PartG mbB
Leopoldstraße 4
80802 München (DE)**

(54) **METHOD AND DEVICE WITH INFERENCE-BASED DIFFERENTIAL CONSIDERATION**

(57) A processor-implemented method is provided. The method includes, for each layer of a plurality of layers of a neural network for an input data provided to the neural network, obtain activation data of a corresponding layer of the plurality of layers, resulting from an inference operation of the corresponding layer; generate differential data of the activation data of the corresponding layer with respect to input data; and generate differential data of output data of the neural network with respect to the input data, based on the generated differential data of each layer.

FIG. 3

EP 4 250 179 A1

**Description**

BACKGROUND

1. Field

The following description relates to a method and apparatus with inference-based differential consideration.

2. Description of Related Art

AI technology includes machine learning training to generate trained machine learning models and machine learning inference through use of the trained machine learning models.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is defined by the independent claims. Preferred embodiments are specified in the dependent claims.

In a general aspect, a processor-implemented method includes for each layer of a plurality of layers of a neural network for an input data provided to the neural network: obtain activation data of a corresponding layer of the plurality of layers, resulting from an inference operation of the corresponding layer; generate differential data of the activation data of the corresponding layer with respect to input data; and generate differential data of output data of the neural network with respect to the input data, based on the generated differential data of each layer. The generating of the differential data may include for each layer of the layers, calculating a Jacobian matrix with respect to the input data.

The generating of the differential data may include calculating a Jacobian matrix of the corresponding layer with respect to the input data by performing the inference operation of the corresponding layer.

The generating of the differential data may include for each layer, calculating a Jacobian matrix of the corresponding layer with respect to the input data without performing backpropagation.

The method may include for each layer, performing the inference operation of the corresponding layer to generate the activation data of the corresponding layer; and generating output data of the neural network based on the generated activation data of each of the layers.

The method may include generating differential input data comprising one or more elements for a differential value among a plurality of elements of the input data.

The generating of the differential data may include for each layer, calculating a Jacobian matrix of the corresponding layer with respect to the differential input data.

A memory size for inference of the neural network may be determined based on a number of elements of the differential input data and a maximum value of dimensions of each Jacobian matrix of the plurality of layers with respect to the differential input data.

In a general aspect, an electronic device includes a processor configured to: for each layer of a plurality of layers of a neural network for an input data provided to the neural network: obtain activation data of a corresponding layer of the plurality of layers, resulting from an inference operation of the corresponding layer; generate differential data of the activation data of the corresponding layer with respect to the input data; and generate differential data of output data of the neural network with respect to the input data, based on the generated differential data of each layer.

The processor may be configured to: for each layer of the layers, calculate a Jacobian matrix with respect to the input data.

The processor may be configured to calculate a Jacobian matrix of the corresponding layer with respect to the input data by performing the inference operation of the corresponding layer.

The processor may be configured to: for each layer, calculate a Jacobian matrix of the corresponding layer with respect to the input data without performing backpropagation.

The processor may be configured to: for each layer, performing the inference operation of the corresponding layer to generate the activation data of the corresponding layer; and generating output data of the neural network based on the generated activation data of each of the layers.

The processor may be configured to: generate differential input data including one or more elements for a differential value among a plurality of elements of the input data.

The processor may be configured to: for each layer calculate a Jacobian matrix of the corresponding layer with respect to the differential input data.

A memory size for inference of the neural network may be determined based on a number of elements of the differential input data and a maximum value of dimensions of each Jacobian matrix of the plurality of layers with respect to the differential input data.

In a general aspect, a processor-implemented method includes generating differential data of output data of a neural network based on respective differential data of each layer of the neural network, generated during corresponding forward propagation operations of the neural network; wherein the differential data of output data may be obtained based on a Jacobian matrix for input data of a layer of the plurality of layers.

The differential data of the output data of the neural network may be obtained with respect to the input data, based on differential data of an output activation of a corresponding layer with respect to the input data.

Other features and aspects will be apparent from the following detailed description, the drawings, and the claims.

BRIEF DESCRIPTION OF DRAWINGS

FIG. 1A illustrates an example operation performed by an example neural network, according to one or more example embodiments.
FIG. 1B illustrates an example of neural network system, in accordance with one or more example embodiments.
FIG. 2 illustrates an example typical differential calculation method, in accordance with one or more embodiments.
FIG. 3 illustrates an example differential calculation method, in accordance with one or more example embodiments.
FIG. 4 illustrates an example of obtaining differential data, in accordance with one or more example embodiments.
FIG. 5 illustrates an example of obtaining differential data from a multilayer perceptron (MLP) network, in accordance with one or more example embodiments.
FIG. 6 illustrates an example hardware configuration of an example inference device, in accordance with one or more example embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

In an example, machine learning may be applied to technical fields such as, but not limited to, linguistic understanding, visual understanding, inference/prediction, knowledge representation, motion control, and the like.

In an example, linguistic understanding is a technique of recognizing and applying and/or processing human language and/or characters, and includes natural language processing, machine translation, dialogue systems, question and answer, speech recognition/synthesis, and the like. Visual understanding is a technique of recognizing and processing objects as human vision does, and includes object recognition, object tracking, image retrieval, person recognition, scene understanding, spatial understanding, image enhancement, and the like. Inference/prediction is a technique of determining information and performing logical inference and prediction, and includes knowledge/probability-based inference, optimization prediction, preference-based planning, recommendation, and the like. Knowledge representation is a technique of automatically processing human experience information into knowledge data, and includes knowledge construction (data generation/classification), knowledge management (data utilization), and the like. Motion control is a technique of controlling autonomous driving of a vehicle and movements of a robot, and includes movement control (navigation, collision, driving), operation control (action control), and the like.

The example embodiments described herein may be various types of products, such as, for example, a personal computer (PC), a laptop computer, a tablet computer, a smartphone, a television (TV), a smart home appliance, an intelligent vehicle, a kiosk, and a wearable device, as non-limiting examples.

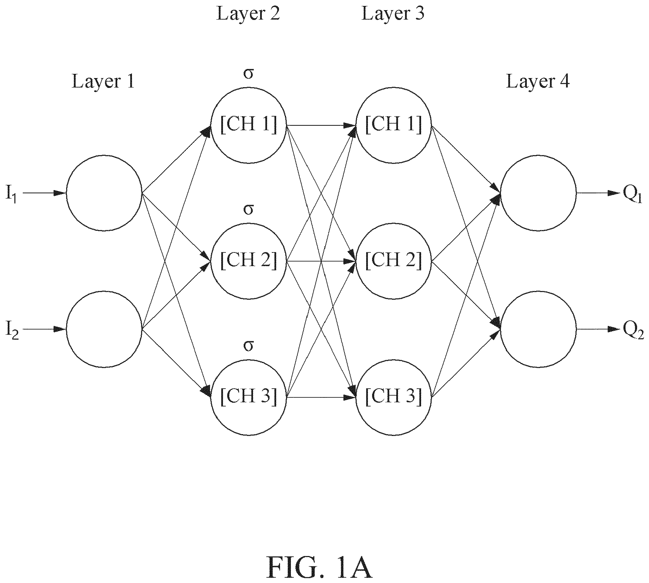

FIG. 1A illustrates an example operation performed by an example neural network, in accordance with one or more example embodiments.

A deep neural network (DNN) may include a plurality of layers. For example, the DNN includes an input layer configured to receive input data, an output layer configured to output an inference result, and a plurality of hidden layers provided between the input layer and the output layer.

The DNN may be one or more of a fully connected network, a convolution neural network (CNN), a recurrent neural network (RNN), an attention network, a self-attention network, and the like, or may include different or overlapping neural network portions respectively with such full, convolutional, or recurrent connections.

A method of training the neural network is referred to as deep learning.

The training of the neural network may include determining and updating weights and biases of weighted between layers, e.g., weights and biases of weighted connections between neurons included in different layers (and/or a same layer, such as in a RNN) among neighboring layers. Briefly, any such reference herein to "neurons" is not intended to impart any relatedness with respect to how the neural network architecture computationally maps or thereby intuitively recognizes or considers information, and how a human's neurons operate. In other words, the term "neuron" is merely a term of art referring to the hardware connections implemented operations of nodes of an neural network, and will have a same meaning as the node of the neural network.

For example, weights and biases among a plurality of hierarchical structures and a plurality of layers or neurons may be collectively referred to as connectivity of the neural network. The training of the neural network may thus be construed as constructing and learning this connectivity.

Referring to FIG. 1A, a neural network may be of a structure including an input layer, hidden layers, and an output layer, and may perform an operation based on received input data (e.g., $I_1$ and $I_2$) and generate output data (e.g., $O_1$ and $O_2$) based on a result of performing the operation.

As described above, the neural network may be a DNN or an n-layer neural network that includes one or more hidden layers. For example, as illustrated in FIG. 1A, the neural network may be a DNN that includes an input layer (Layer 1), one or more hidden layers (Layer 2 and Layer 3), and an output layer (Layer 4). The DNN may include, for example, a CNN, an RNN, a deep belief network (DBN), a restricted Boltzmann machine (RBM), and the like, but examples of which are not limited thereto.

For example, the CNN may implement a convolution operation and may be effective in finding a pattern to recognize an object, a face, or a scene in an image, as non-limiting examples.

In the CNN, a filter may perform a convolution operation while traversing pixels or data of an input image at a predetermined interval to extract features of the image and generate a feature map or an activation map as a result of the convolution operation. The "filter" may include, for example, common parameters or weight parameters to extract features from an image. The filter may also be referred to as a "kernel." In an example in which the filter is applied to an input image, a predetermined interval at which the filter moves across (or traverses) pixels or data of the input image may be referred to as a "stride." For example, when the stride is "2," the filter may perform a convolution operation while moving two spaces in the pixels or data of the input image. In this example, it may be expressed as "stride parameter = 2." In a convolutional layer, there may be multiple such filters, and each one of the filters may have one or more channels, e.g., corresponding to a number of channels of the input data.

The "feature map" may refer to information of an original image that results from a convolution operation, and may be expressed in the form of a matrix, for example. The "activation map" may refer to a result that is obtained by applying an activation function to the feature map. That is, the activation map may correspond to a final output result of each of the convolution layers that perform convolution operations in the CNN.

The shape of data that is finally output from the CNN may vary according to, for example, the respective sizes of the filter of each layer, the respective strides, the respective applications of padding, and respective sizes of max pooling performed on a result of each of the one or more convolution layers, and the like. In a convolution layer, the size of a feature map may be less than the size of input data due to the effect of the filter and the stride.

The "padding" may be construed as filling corners of data with a predetermined value by a predetermined number of pixels (e.g., "2"). For example, when the padding is set to "2," a predetermined value (e.g., "0") corresponding to two pixels may be filled in four sides-up, down, left, and right-of data having the size of 32 × 32. In this example, when the padding is set to 2, the size of the final data may become 36 × 36. In this example, it may be expressed as "padding parameter = 2." As described above, the padding may be used to control the size of output data in a convolution layer.

For example, when the padding is not used, data may decrease in its spatial size while passing each convolution layer, that may result in information around corners of the data disappearing. Therefore, the padding may be used to increase the first size of the data, to prevent information around corners of data from disappearing or to match the size of an output in a convolution layer and the spatial size of input data.

For example, when the neural network is implemented in a DNN architecture, the neural network may include many layers that perform respective trained inference operations. The neural network with many layers may thus process complex data sets compared to a neural network including a single layer. Although the neural network is illustrated as including four layers, it is provided merely as an example, and the neural network may include a greater or smaller number of layers or may include a greater or smaller number of channels. That is, the neural network may include layers in various structures different from what is illustrated in FIG. 1A.

Each of the layers included in the neural network may include a plurality of channels. The channel may correspond to nodes which are known as neurons, processing elements (PEs), units, or other similar terms. For example, as illustrated in FIG. 1A, Layer 1 may include two channels (or nodes), and Layer 2 and Layer 3 may each include three channels (or nodes). However, it is provided merely as an example, and each of the layers included in the neural network may include various numbers of channels (or nodes).

The channels included in each of the layers of the neural network may be interconnected to process data. For example, one channel may receive data from other channels and perform an operation thereon, and output a result of the operation to other channels.

An input and an output of each of the channels may be referred to as an input activation and an output activation, respectively. That is, an activation may represent a parameter corresponding to an output of one channel and simultaneously an input of channels included in a subsequent layer. Each of the channels may generate its own activation based on activations, weights, and biases received from channels included in a previous layer. A weight, which is a parameter used to calculate an output activation at each channel, may be a value assigned to a connection relationship between channels.

Each of the channels may be processed by a computational device or processing element (PE) that receives one or more inputs and outputs one or more output activations, and an input and an output of each of the channels may be mapped. For example, when $\sigma$ denotes an activation function, $w_j^{i,k}$ denotes a weight from a kth node included in a jth layer to an ith node included in a (j+1)th layer, $b_{j+1}^i$ denotes a bias value of the ith node included in the (j+1)th layer, and when $a_j^k$ is an activation of the kth node of the jth layer, an activation $a_{j+1}^i$ may be expressed as in Equation 1 below.

Equation 1:

$$a_{j+1}^i = \sigma(\sum (w_j^{i,k} \times a_j^k) + b_{j+1}^i)$$

For example, as illustrated in FIG. 1A, an activation of a first channel (CH 1) of a second layer (Layer 2) may be expressed as $a_2^1$. Additionally, $a_2^1$ may have a value of $a_2^1 = \sigma(w_1^{1,1} \times a_1^1 + w_1^{1,2} \times a_1^2 + b_2^1)$ according to Equation 1. However, Equation 1 above is provided as an example only to describe an activation, a weight, and a bias used for the neural network to process data, and examples are not limited thereto. For example, the activation may be a value obtained by allowing a weighted sum of activations received from a previous layer to pass through an activation function, such as, for example, a sigmoid function or a rectified linear unit (ReLU) function.

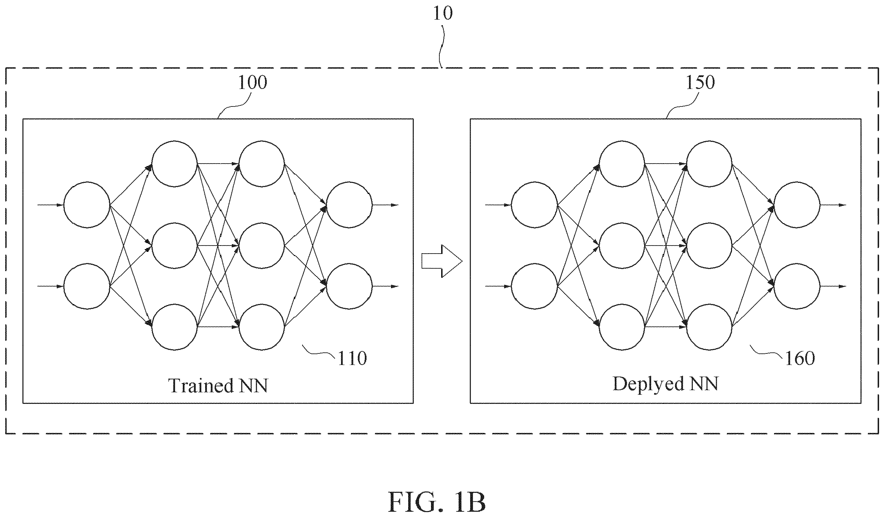

FIG. 1B illustrates an example neural network system, in accordance with one or more example embodiments.

Referring to FIG. 1B, an example electronic device (or system) 10, in accordance with an example embodiment may include a training device 100 and an inference device 150. In an example, one or more processors of the electronic device 10 may perform both operations of the training device 100 and/or the inference device 150. In an example, both of the training device 100 and the inference device 150 are representative of one or more processors, and may also both be representative of memories storing instructions which, when executed by the respective one or more processors, configure the same, as described herein. Thus, in an example, the training device 100 may be a computer or one or more processors configured to perform various processing operations, for example, operations of generating a neural network, training or learning a neural network, or retraining a neural network. For example, the training device 100 may be various types of devices, for example, a personal computer (PC), a server device, or a mobile device, as only examples. Each of the training device 100 and the inference device may be independent or separate electronic devices.

The training device 100 may generate a trained neural network 110 by repeatedly or iteratively training (or learning) a given initial neural network. The generating of the trained neural network 110 may be construed as determining parameters of a neural network. The parameters may include various types of information, for example, input/output activations, weights and biases of weighted connections between same and/or different layers of the neural network. When the neural network is repeatedly trained, the parameters of the neural network may be tuned for a more accurate calculation of an output with respect to a given input.

The training device 100 may transmit the trained neural network 110 to the inference device 150, or the inference device may otherwise obtain the trained neural network, or the neural network of the inference device 150 may be independent of the neural network trained by the training device 100. The inference device 150 may be included in, for example, a mobile device or an embedded device. The inference device 150 may be dedicated hardware (HW) that drives or implements operations of a neural network. According to an example embodiment, inference may refer to an operation of driving, or a result of, the trained neural network 110.

The inference device 150 may implement the trained neural network 110 without a change, or may drive a neural network 160 or another neural network obtained by processing, for example, quantizing, the trained neural network 110 or another neural network.

As noted, in an example, the inference device 150 and the training device 100 may be implemented in separate and independent devices. However, examples are not limited thereto, and the inference device 150 and the training device 100 may be implemented in the same device.

As will be described in detail below, the inference device 150 may obtain differential data or a differential value of output data of the trained neural network 110 with respect to input data. For example, deep learning simulation and the like may desire a differential value of the output data of the trained neural network 110 with respect to the input data.

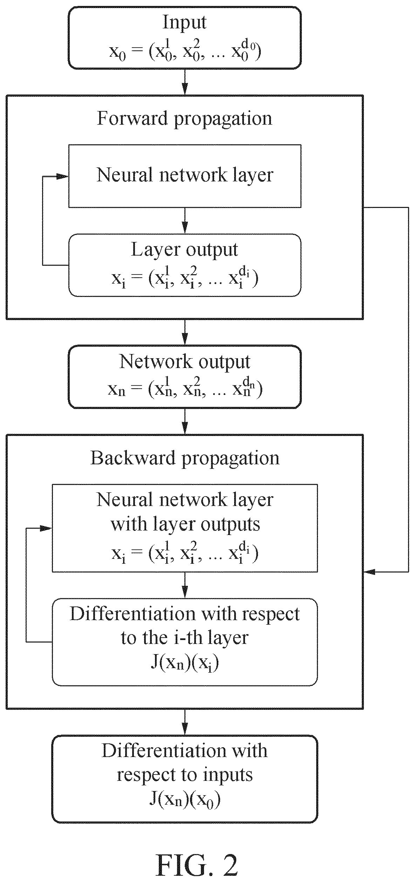

Before describing a differential calculation method according to one or more example embodiments, a typical differential calculation method will be described hereinafter with reference to FIG. 2.

Referring to FIG. 2, a neural network may receive input data $(x_0 = (x_0^1, x_0^2, ..., x_0^{d_0}))$ including $d_0$ elements. Subsequently, each of a plurality of layers included in the neural network may obtain an output activation

$$\left(\mathrm{x}_i = \left(x_i^1, x_i^2, \dots, x_i^{d_i}\right)\right)$$ through forward propagation, and output final output data $$\left(\mathrm{x}_n = \left(x_n^1, x_n^2, \dots, x_n^{d_n}\right)\right)$$ .

However, typically, to obtain differential data (e.g., $J(x_n)(x_i)$ when a differential value is represented by a Jacobian matrix) of output data $x_n$ of a neural network with respect to input data $x_0$, it may be beneficial to perform backpropagation separately after an inference is performed. In this example, to perform backpropagation, an output $x_i$ of each layer should be stored. The output $x_i$ of each layer may represent an output activation described above with reference to FIG. 1A.

Therefore, typically, a large amount of memory may be used because an output activation of each layer should be stored during an inference process to obtain differential data, and an additional time for an operation may be used because backpropagation should be additionally performed.

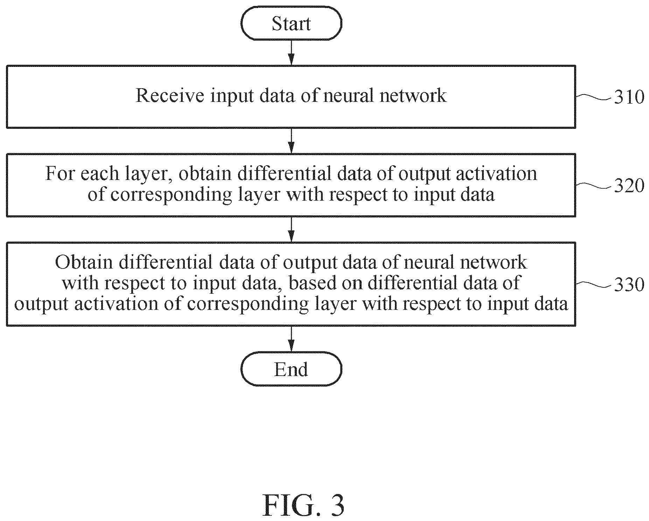

FIG. 3 illustrates an example differential calculation method in accordance with one or more example embodiments.

The operations described below with reference to FIG. 3 may be performed in sequence and manner as illustrated in FIG. 3. However, the order of some of the operations may be changed or omitted, without departing from the scope of the illustrative examples described. The operations described below with reference to FIG. 3 may be performed in parallel or simultaneously. The operations described below with reference to FIG. 3 may be performed by the inference device 150 described above with reference to FIG. 1B.

According to an example embodiment, the inference device 150 may obtain differential data of output data with respect to input data only through forward propagation without backpropagation.

In operation 310, the inference device 150 may receive input data of a neural network. The input data may include a plurality of elements.

The inference device 150 may proceed while calculating information for obtaining (e.g., necessary to obtain) the differential data of the output data with respect to the input data, for each of the layers.

The information calculated for each of the layers may include an output activation of a corresponding layer and differential data with respect to the input data, and information associated with previous layers may not be stored.

In operation 320, the inference device 150 may obtain differential data of an output activation of a corresponding layer with respect to the input data, for each of the layers. Specifically, for each of the layers, the inference device 150 may obtain partial differential data of an output activation of a corresponding layer with respect to the input data. For example, the inference device 150 may obtain the partial differential data by calculating a Jacobian matrix for input data of a corresponding layer. However, this is only an example, and the partial differential data is not necessarily obtained using the foregoing method but may be obtained using various methods in addition to the foregoing method of calculating a Jacobian matrix.

The inference device 150 may obtain the differential data of the output data with respect to the input data through the Jacobian matrix at the same time when the inference of the neural network is finished.

In operation 330, the inference device 150 may obtain differential data of output data of the neural network with respect to the input data, based on the differential data of the output activation of a corresponding layer with respect to the input data.

That is, the inference device 150 may be effective in terms of execution speed because it may not require the performance of backpropagation, and may reduce memory usage because it may not require storing activations of intermediate layers.

Operations 310 to 330 will be described in more detail with reference to the following equations, and the layers of the neural network may follow Equation 2 below.

<div align="center">Equation 2:</div>

$$\mathrm{x}_{i+1} = \mathrm{f}_i(\mathrm{W}_i \mathrm{x}_i + \mathrm{b}_i)$$

In Equation 2, $x_i$, $W_i$, and $b_i$ denote an input activation, a weight, and a bias of an ith layer, respectively, and $f_i$ denotes an activation function.

Differential data of output data $y$ ($y = x_n$) of the neural network with respect to input data $x_0$ may be expressed as in Equation 3 below.

Equation 3:

$$\frac{dy}{dx_0} = \Pi_{i=0}^{n-1} \frac{dx_{i+1}}{dx_i} = \frac{dx_k}{dx_0} \times \Pi_{i=k}^{n-1} \frac{dx_{i+1}}{dx_i}$$

According to Equation 3, when a value $\frac{dx_k}{dx_0}$ is stored after a k-1th layer, weight or activation information of a previous layer before the k-1th layer may no longer be needed to obtain the differential data $\frac{dy}{dx_0}$ .

That is, even without performing backpropagation separately, the inference device 150 may obtain final differential data $\frac{dy}{dx_0}$ through forward propagation by calculating an output activation and differential data with respect to input data, for each layer in an inference process of the neural network.

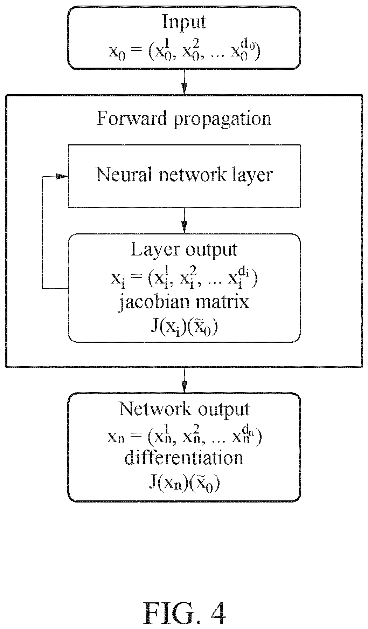

FIG. 4 illustrates an example of obtaining differential data, in accordance with one or more example embodiments.

What has been described above with reference to FIG. 3 may apply to the example of FIG. 4, and a repeated description will be omitted.

Referring to FIG. 4, a neural network may receive input data $(x_0 = (x_0^1, x_0^2, ..., x_0^{d_0}))$ including $d_0$ elements.

Additionally, with respect to the input data $(x_0 = (x_0^1, x_0^2, ..., x_0^{d_0}))$ including a plurality of elements (e.g., $d_0$ elements), the inference device 150 may obtain differential input data ($\tilde{x}_0 =$

$$(x_0^{a_1}, x_0^{a_2}, ..., x_0^{a_k}))$$

including one or more elements that need differential data among the plurality of elements of the input data.

When passing through each layer of the neural network, the inference device 150 may calculate an output activation $(x_i = (x_i^1, x_i^2, ..., x_i^{d_i}))$ of a layer along with differential data (e.g., $J(x_i)(\tilde{x}_0)$) of the output activation with respect to the differential input data $\tilde{x}_0$.

By repeating the foregoing process for each layer, the inference device 150 may obtain the final output data $x_n$ and the differential data (e.g., $J(x_n)(\tilde{x}_0)$) of the neural network.

The inference device 150 may not need to calculate or perform a backpropagation operation to obtain differential data, and may thus improve the speed. Additionally, storing a weight and activation of a layer for which an operation or calculation is completed may no longer be necessary, and thus memory usage may be greatly reduced.

For example, when differential data is necessary for m dimensions of initial input data ($x_0 = (x_0^1, x_0^2, x_0^3 ... x_0^d)$), the typical method may need memory for storing a total of $\sum_{k=1}^{n} \dim(x_k)$ activations. However, according to one or more example embodiments, it may not be necessary to store information of a previous layer, and thus only m $\times$ max(dim($x_k$)) memory may be needed.

That is, as the depth of the neural network increases or the number of pieces of desired differential data decreases, the method described herein according to one or more example embodiments may be greatly effective.

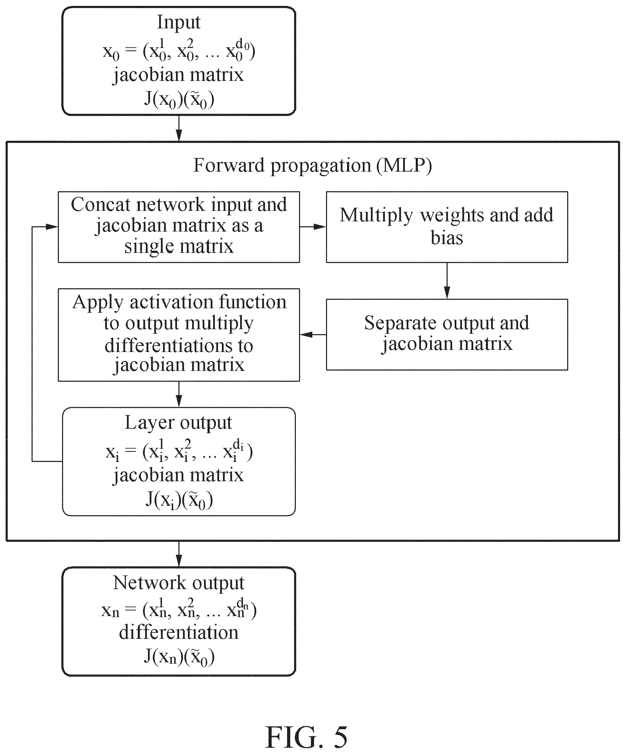

FIG. 5 illustrates an example of obtaining differential data from a multilayer perceptron (MLP) network according to one or more example embodiments.

Referring to FIG. 5, in a process of y = Wx + b in an MLP, a Jacobian matrix $J(y)(\tilde{x}_0)$ may be W $\times$ $J(x)(\tilde{x}_0)$ (i.e., $(J(y)(\tilde{x}_0) = W \times J(x)(\tilde{x}_0))$), and when being replaced with $x_{i-1}' = concat(x_{i-1}, J(x_{i-1})(\tilde{x}_0))$ and b' = (b, 0, 0 ... 0), y' = concat(y, $J(y)(\tilde{x}_0)$) = W $\times$ $x_{i-1}'$ + b' and all calculations may be possible by calculating the matrix once.

For an activation function f, using $x_{i-1}$ = f(y), $J(x_i)(\tilde{x}_0) = f'(y) \times J(y)(\tilde{x}_0)$ may enable the calculation of output data and Jacobian matrix.

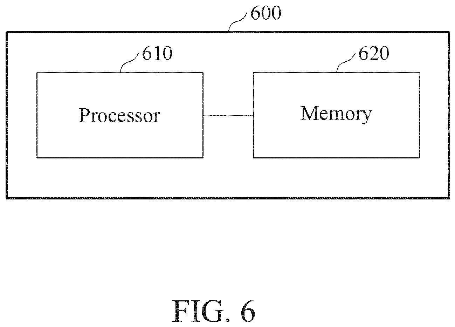

FIG. 6 illustrates an example hardware configuration of an example inference device, in accordance with one or more example embodiments.

Referring to FIG. 6, an inference device 600 may include one or more processors 610 and one or more memories 620. As a non-limiting example, the inference device 600 may be the inference device 150 of FIG. 1A.

In the example of FIG. 6, only the components relating to the example embodiments described herein are illustrated. Thus, the inference device 600 may also include other general-purpose components, in addition to the components illustrated in FIG. 6. The inference device 600 of FIG. 6 described hereinafter may also be referred to as an electronic device.

The inference device 600 may be a computing device that performs inference on a neural network. For example, the inference device 600 may be, as non-limiting examples, a PC, a service device, and a mobile device, and may also be a device provided in, for example, an autonomous vehicle, a robotics device, a smartphone, a table device, an augmented reality (AR) device, and an Internet of things (IoT) device, which may perform voice and image recognition by implementing a neural network, but examples of which are not limited thereto.

The one or more processors 610 may be a hardware component that performs overall control functions to control operations of the inference device 600. For example, the one or more processors 610 may control overall operations of the inference device 600 by executing programs stored in the memory 620 of the inference device 600. The one or more processors 610 may be implemented as, for example, a central processing unit (CPU), a graphics processing unit (GPU), an application processor (AP), a neural processing unit (NPU), and the like, which may be included in the inference device 600, but examples of which are not limited thereto.

The memory 620 may be a hardware component that stores one or more processors, and various pieces of neural network data processed in the one or more processors 610. The memory 620 may store, for example, data sets to be input to a neural network. The memory 620 may also store various applications to be run by the one or more processors 610, for example, an application for obtaining neural network differential data, a neural network driving application, a driver, and the like.

The memory 620 may include at least one of a volatile memory or a nonvolatile memory. The nonvolatile memory may include, as non-limiting examples, a read-only memory (ROM), a programmable ROM (PROM), an electrically programmable ROM (EPROM), an electrically erasable PROM (EEPROM), a flash memory, a phase-change random-access memory (PRAM), a magnetic RAM (MRAM), a resistive RAM (RRAM), a ferroelectric RAM (FeRAM), and the like. The volatile memory may include, as non-limiting examples, a dynamic RAM (DRAM), a static RAM (SRAM), a synchronous DRAM (SDRAM), a PRAM, an MRAM, an RRAM, an FeRAM, and the like. Further, the memory 620 may include at least one of a hard disk drive (HDD), a solid state drive (SSD), a compact flash (CF), secure digital (SD), micro-SD, mini-SD, extreme digital (xD), or a memory stick.

The training device, the inference devices, the electronic devices, the one or more processors 610, memory 620, and other devices of FIGS. 1-6, and other components described herein are implemented as, and by, hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods that perform the operations described in this application, and illustrated in FIGS. 1-6, are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller, e.g., as respective operations of processor implemented methods. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that be performed by the hardware components and the methods as described above. In one example, the instructions or software include machine code that is directly executed by the one or more processors or computers, such as machine code produced by a compiler. In another example, the instructions or software include higher-level code that is executed by the one or more processors or computers using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), EEPROM, RAM, DRAM, SRAM, flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors and computers so that the one or more processors and computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent to one of ordinary skill in the art, after an understanding of the disclosure of this application, that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined by the enclosed claims.

**Claims**

1. A processor-implemented method, comprising:
   for each layer of a plurality of layers of a neural network for an input data provided to the neural network:

   obtain activation data of a corresponding layer of the plurality of layers, resulting from an inference operation of the corresponding layer;
   generate differential data of the activation data of the corresponding layer with respect to input data; and
   generate differential data of output data of the neural network with respect to the input data, based on the generated differential data of each layer.

2. The method of claim 1, wherein the generating of the differential data comprises one of:

for each layer of the layers, calculating a Jacobian matrix with respect to the input data,
calculating a Jacobian matrix of the corresponding layer with respect to the input data by performing the inference operation of the corresponding layer, and
for each layer, calculating a Jacobian matrix of the corresponding layer with respect to the input data without performing backpropagation.

3. The method of claim 1 or 2, further comprising:

for each layer, performing the inference operation of the corresponding layer to generate the activation data of the corresponding layer; and
generating output data of the neural network based on the generated activation data of each of the layers.

4. The method of one of claims 1 to 3, further comprising:
generating differential input data comprising one or more elements for a differential value among a plurality of elements of the input data.

5. The method of claim 4, wherein the generating of the differential data comprises:

for each layer, calculating a Jacobian matrix of the corresponding layer with respect to the differential input data, and
wherein a memory size for inference of the neural network is determined based on a number of elements of the differential input data and a maximum value of dimensions of each Jacobian matrix of the plurality of layers with respect to the differential input data.

6. An electronic device, comprising:
a processor configured to:
for each layer of a plurality of layers of a neural network for an input data provided to the neural network:

obtain activation data of a corresponding layer of the plurality of layers, resulting from an inference operation of the corresponding layer;
generate differential data of the activation data of the corresponding layer with respect to the input data; and
generate differential data of output data of the neural network with respect to the input data, based on the generated differential data of each layer.

7. The device of claim 6, wherein the processor is configured to:
for each layer of the layers, calculate a Jacobian matrix with respect to the input data.

8. The device of claim 6 or 7, wherein the processor is configured to:
calculate a Jacobian matrix of the corresponding layer with respect to the input data by performing the inference operation of the corresponding layer.

9. The device of one of claims 6 to 8, wherein the processor is configured to:
for each layer, calculate a Jacobian matrix of the corresponding layer with respect to the input data without performing backpropagation.

10. The device of one of claims 6 to 9, wherein the processor is configured to:

for each layer, performing the inference operation of the corresponding layer to generate the activation data of the corresponding layer; and
generating output data of the neural network based on the generated activation data of each of the layers.

11. The device of one of claims 6 to 10, wherein the processor is configured to:
generate differential input data including one or more elements for a differential value among a plurality of elements of the input data.

12. The device of claim 11, wherein the processor is configured to:
for each layer calculate a Jacobian matrix of the corresponding layer with respect to the differential input data.

13. The device of claim 12, wherein a memory size for inference of the neural network is determined based on a number of elements of the differential input data and a maximum value of dimensions of each Jacobian matrix of the plurality of layers with respect to the differential input data.

14. A non-transitory computer-readable storage medium storing instructions that, when executed by a processor, cause the processor to perform the method, comprising:

generating differential data of output data of a neural network based on respective differential data of each layer of the neural network, generated during corresponding forward propagation operations of the neural network; wherein the differential data of output data is obtained based on a Jacobian matrix for input data of a layer of the plurality of layers.

15. The computer-readable storage medium of claim 14, wherein the differential data of the output data of the neural network is obtained with respect to the input data, based on differential data of an output activation of a corresponding layer with respect to the input data.

Layer 2      Layer 3

Layer 1                σ                              Layer 4

σ

$I_1$ →  [CH 1]      [CH 1]        → $Q_1$

σ

$I_2$ →  [CH 2]      [CH 2]        → $Q_2$

[CH 3]      [CH 3]

FIG. 1A

FIG. 1B

EP 4 250 179 A1

Input
$$x_0 = (x_0^1, x_0^2, ... x_0^{d_0})$$

Forward propagation

Neural network layer

Layer output
$$x_i = (x_i^1, x_i^2, ... x_i^{d_i})$$

Network output
$$x_n = (x_n^1, x_n^2, ... x_n^{d_n})$$

Backward propagation

Neural network layer
with layer outputs
$$x_i = (x_i^1, x_i^2, ... x_i^{d_i})$$

Differentiation with respect
to the i-th layer
$$J(x_n)(x_i)$$

Differentiation with
respect to inputs
$$J(x_n)(x_0)$$

FIG. 2

Start

Receive input data of neural network ~310

For each layer, obtain differential data of output activation of corresponding layer with respect to input data ~320

Obtain differential data of output data of neural network with respect to input data, based on differential data of output activation of corresponding layer with respect to input data ~330

End

FIG. 3

Input
$x_0 = (x_0^1, x_0^2, \ldots x_0^{d_0})$

Forward propagation

Neural network layer

Layer output
$x_i = (x_i^1, x_i^2, \ldots x_i^{d_i})$
jacobian matrix
$J(x_i)(\tilde{x}_0)$

Network output
$x_n = (x_n^1, x_n^2, \ldots x_n^{d_n})$
differentiation
$J(x_n)(\tilde{x}_0)$

FIG. 4

Input
$$x_0 = (x_0^1, x_0^2, \dots x_0^{d_0})$$
jacobian matrix
$$J(x_0)(\tilde{x}_0)$$

Forward propagation (MLP)

Concat network input and jacobian matrix as a single matrix

Multiply weights and add bias

Apply activation function to output multiply differentiations to jacobian matrix

Separate output and jacobian matrix

Layer output
$$x_i = (x_i^1, x_i^2, \dots x_i^{d_i})$$
jacobian matrix
$$J(x_i)(\tilde{x}_0)$$

Network output
$$x_n = (x_n^1, x_n^2, \dots x_n^{d_n})$$
differentiation
$$J(x_n)(\tilde{x}_0)$$

FIG. 5

600

610

620

Processor

Memory

FIG. 6

Europäisches
Patentamt

European
Patent Office

Office européen
des brevets

# EUROPEAN SEARCH REPORT

**Application Number**

EP 23 16 3105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/042606 A1 (BAI SHAOJIE [US] ET AL) 11 February 2021 (2021-02-11) * paragraphs [0001], [0009], [0020], [0022] * ----- | 1-15 | INV. G06N3/04 G06N3/08 |
| X | US 2020/394521 A1 (BAKER JAMES K [US]) 17 December 2020 (2020-12-17) * paragraphs [0003], [0010] - [0016]; figures 3A,4 * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 4 August 2023 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3105

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2023

| Patent document cited in search report | | Publication date | Patent family member(s) | | Publication date |
|---|---|---|---|---|---|
| US 2021042606 | A1 | 11-02-2021 | CN | 112348163 A | 09-02-2021 |
| | | | EP | 3772709 A1 | 10-02-2021 |
| | | | US | 2021042606 A1 | 11-02-2021 |
| US 2020394521 | A1 | 17-12-2020 | US | 2020394521 A1 | 17-12-2020 |
| | | | WO | 2020005471 A1 | 02-01-2020 |

For more details about this annex : see Official Journal of the European Patent Office, No. 12/82